# EUROPÄISCHE PATENTSCHRIFT

(11) **EP 0 861 569 B1**
(45) Veröffentlichungstag und Bekanntmachung des Hinweises auf die Patenterteilung: **10.04.2002**
(21) Anmeldenummer: 96934297.1
(22) Anmeldetag: 01.11.1996
(51) Int. Cl.: H04Q 11/04, H04M 1/02

(54) **ANSCHLUSSSTECKDOSE FÜR FERNMELDEENDGERÄTE**
CONNECTING SOCKET FOR TELECOMMUNICATIONS TERMINALS
DOUILLE DE CONNEXION POUR TERMINAUX DE TELECOMMUNICATION

(30) Priorität: 15.11.1995 CH 323895
(43) Veröffentlichungstag der Anmeldung: 02.09.1998
(73) Patentinhaber: Siemens Schweiz AG, 8047 Zürich (CH)
(72) Erfinder: ALLEGRANZA, Patrick, CH-8004 Zürich (CH); GEML, Hubert, CH-8965 Berikon (CH); KOPP, Peter, CH-8967 Widen (CH); KURZ, Rudolf, CH-8805 Richterswil (CH); STRITT, Michael, CH-4625 Oberbuchsiten (CH)
(74) Vertreter: Berg, Peter
(86) Internationale Anmeldenummer: CH9600385
(87) Internationale Veröffentlichungsnummer: WO9718686

(56) Entgegenhaltungen:
- EP-A- 0 370 423
- EP-A- 0 668 706
- WO-A-95/32575
- DE-A- 4 132 917
- DE-C- 3 917 029
- US-A- 5 243 642
- PATENT ABSTRACTS OF JAPAN vol. 014, no. 471 (E-0990), 15.Oktober 1990 & JP 02 192397 A (NEC CORP), 30.Juli 1990,

## Beschreibung

Die vorliegende Erfindung betrifft eine Anschlusssteckdose für Fernmeldeendgeräte nach dem Gegenstand der Patentansprüche 1 und 2.

Die Digitalisierung eines Teilnehmeranschlusses ist die wesentliche technische Neuerung bei einem nach ISDN-(Integrated Services Digital Network)-Normen aufgebauten Fernmeldenetz gegenüber einem digitalen Femmeldenetz mit Übertragung von Analogsignalen zu Benutzerstationen. Unter einer Benutzerstation wird dabei eine über eine Anschlussleitung an eine Vermittlungseinheit anschliessbare Einheit verstanden, die aus einer Netzabschlusseinheit und einem oder mehreren Endgeräten (Terminal Equipment) besteht, wobei die Endgeräte entweder gleichartig, z.B. mehrere Fernsprecher, oder unterschiedlich sind, z.B. Sprach- und Textgeräten. Weitere Angaben zu Benutzerstationen sind beispielsweise Peter Bocker, ISDN - Das diensteintegrierende digitale Nachrichtennetz (2. Auflage, Berlin, 1990), Seiten 59 ff. zu entnehmen.

Die Netzabschlusseinheit besorgt die Ankopplung der Benutzerstation an die Anschlussleitung und ermöglicht die gemeinsame Nutzung der Anschlussleitung durch mehrere Endgeräte. Netzabschlusseinheiten sind derzeit in separaten Geräteeinheiten zur Befestigung an einer Wand oder als Tischgeräteeinheiten erhältlich und beanspruchen einerseits Platz und benötigen andererseits eine separate Anschlussmöglichkeit und Verkabelung zur Anschlussleitung und zu den Endgeräten. Derartige Netzabschlusseinheiten sind beispielsweise aus europäischen Patentveröffentlichung EP 0668706 A2 und dem US-Patent Nr. 5,243,642 bekannt.

In der internationalen PCT-Offenlegungsschrift WO 95/32575 veröffentlicht am 30.11.95, ist darüberhinaus ein Netzwerkabschluss-Equipment offenbart bzw. vorgeschlagen worden, das der Anbindung eines Endgeräts an ein Telekommunikationsnetzwerk dient. In diesem Dokument sind modulare Netzabschlusskomponenten unterschiedlicher Funktionalität offenbart, die den Netzabschluss bilden können. Beispielhaft seien eine ergänzende Serviceeinheit und eine Kartenlesereinheit genannt, deren Anordnung jedoch erhebliche praktische Probleme bereiten kann, weil geeignete Befestigungsorte gefunden werden müssen und weil das Platzangebot häufig beschränkt wird. Eine Lösung soll hier eine Anschlussdose schaffen, die eine Adaptereinheit mit auswechselbaren Frontblenden und mit einer Zugangsblende aufweist. Diese Anschlussdose kann an einer Wand befestigt oder in der Wand versenkt angeordnet werden. Dabei ist diese Anschlussdose mit der Adaptereinheit nur in der Lage Aufnahmesockel für diese vorstehend genannten funktionellen Einheiten zu bieten, die durch die entsprechende Auswahl von Frontblenden dann auf diese Anschlussdose und deren Adaptereinheit aufsteckbar sind. Damit gelten auch für dieses Dokument die weiter oben zum Stand der Technik angeführten Nachteile.

Der vorliegenden Erfindung liegt daher die Aufgabe zugrunde, einen Netzabschluss anzugeben, bei dem weniger Gerätekomponenten notwendig sind und bei dem die Verkabelung wesentlich vereinfacht wird.

Diese Aufgabe wird bei einer Anschlusssteckdose der eingangs genannten Art erfindungsgemäss auf zweierlei Weise gelöst. Eine Lösung ist durch den Gegenstand des Patentanspruchs 1 angegebenen Massnahmen gegeben. Entsprechend ist eine alternative Lösung durch den Gegenstand des Patentanspruchs 2 angegebenen Merkmale realisiert.

Vorteilhafte Ausgestaltungen der Erfindung sind in weiteren Ansprüchen angegeben.

Die Erfindung weist folgende Vorteile auf: Durch die ganze Integration der Netzabschlusseinheit in eine Steckdose wird die Verkabelung vereinfacht und die Anzahl der notwendigen Steckdosen reduziert. Insbesondere durch die einfache Verkabelung kann die Betriebssicherheit von Benutzerstationen wesentlich erhöht werden. Darüber hinaus ist kein zusätzlicher Platz für eine freistehende Netzabschlusseinheit erforderlich.

Die Erfindung wird nachfolgend anhand einer Zeichnung beispielsweise näher erläutert. Dabei zeigt:
- Fig. 1: eine an das ISDN angeschlossene Steckdose D1, die über einen Anschluss SPA mit einer Speiseeinheit SP, über einen Anschluss A1 mit einem Endgerät E1 und über eine Leitung VU mit weiteren Endgeräten E2, ..., E8 verbunden ist,
- Fig. 2: die Steckdose D1 mit einem Netzabschlussgerät, das einen Anschluss A11 für ein digitales Endgerät E11 und zwei Anschlüsse A12, A13 für analoge Endgeräte E21, E22 aufweist,
- Fig. 3: die Steckdose D1 mit durch einen Power-up-Controller gesteuerten Stromversorgungsbauteilen,
- Fig. 4: ein vorzugsweise eingesetztes Umschaltmodul IUS für die Stromversorgung,
- Fig. 5: eine bevorzugte Anordnung der Bauteile in der Steckdose D1 und
- Fig. 6: die Steckdose D1 mit einem Netzabschlussgerät, das ausschliesslich über die U-Schnittstelle gespeist wird.

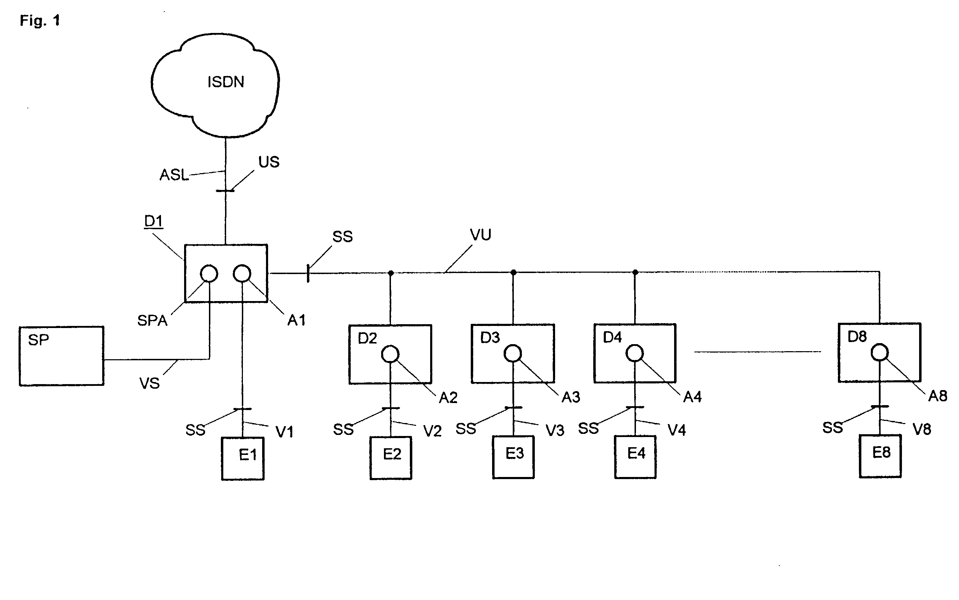

In Fig. 1 ist eine aus acht Steckdosen D1 bis D8 und aus acht Endgeräten E1 bis E8 bestehende Benutzerstation dargestellt, die über eine Anschlussleitung ASL an eine Vermittlungseinheit eines nach ISDN-Normen aufgebauten Femmeldenetzes ISDN angeschlossen ist, wobei es sich bei den Steckdosen D1 bis D8 um sogenannte Aufputz- oder um Unterputz-Steckdosen handeln kann, die vorzugsweise in einen zylinderförmigen Hohlraum mit einem Innendurchmesser von ca. 65 mm und einer Zylinderhöhe von ca. 53 mm eingelassen sind. Die Steckdosen D1 bis D8 sind über eine mehradrige Verbindungsleitung VU miteinander verbunden, wobei diese Verbindungsleitung VU vorzugsweise unter Putz angeordnet ist. Die Endgeräte E1 bis E8 sind über Verbindungsleitungen V1 bis V8 an Endgerätanschlüsse A1 bis A8 der Steckdosen D1 bis D8 anschliessbar, wobei die Verbindungsleitungen V1 bis V8 vorzugsweise über Putz angeordnet sind. Schliesslich ist eine Speiseeinheit SP vorgesehen, die über eine Speiseleitung VS mit einem Versorgungsanschluss SPA der Steckdose D1 verbunden ist.

Benutzerstationen sind - wie erwähnt - in Peter Bocker, ISDN - Das diensteintegrierende digitale Nachrichtennetz (2. Auflage, Berlin 1990), Seiten 59 ff. ausführlich beschrieben, wobei eine Benutzerstation aus einer Netzabschlusseinheit und mehreren an diese angeschlossenen Endgeräten E1 bis E8 besteht und beispielsweise über einen Basisanschluss mit dem Fernmeldenetz ISDN verbunden ist. Ein Basisanschluss besteht dabei aus zwei sogenannten B-Kanälen zur Übertragung von Nutzdaten mit einer Übertragungsrate von je 64 kBit/s und einem sogenannten D-Kanal zur Übertragung von Signalisierungsdaten mit einer Übertragungsrate von 16 kBit/s.

Die in der Benutzerstation enthaltene Netzabschlusseinheit weist zum Femmeldenetz ISDN eine U-Schnittstelle US und zu den Endgeräten E1 bis E8 eine S-Schnittstelle SS auf. Während die Speiseeinheit SP zur Speisung der Endgeräte E1 bis E8 vorgesehen ist, wird die Netzabschlusseinheit über die Anschlussleitung ASL durch die Vermittlungseinheit des Femmeldenetzes ISDN mit Energie versorgt. Darüber hinaus - allerdings lediglich dann, wenn die lokale Speisespannung ausfällt - wird auch eines der acht Endgeräte E1 bis E8 über die Vermittlungseinheit des Femmeldenetzes ISDN mit Energie versorgt. Dieser Zustand wird als Notbetrieb bezeichnet.

Zur Anpassung der Netzabschlusseinheit an die U-Schnittstelle US weist die Netzabschlusseinheit eine Schutzschaltung zum Abblocken von Überspannungen, eine Gabelschaltung zur Trennung zwischen ankommendem und abgehenden Signal und eine Echokompensationseinheit auf, mit deren Hilfe Übersprechen und Echosignalanteile eliminiert werden. Die entsprechenden Schaltungsteile der Netzabschlusseinheit sind erfindungsgemäss vollständig in der Steckdose D1 integriert.

Die S-Schnittstelle SS stellt den teilnehmerseitigen Abschluss der Netzabschlusseinheit dar. Wie erwähnt sind bis zu acht Endgeräte E1 bis E8 an die Netzabschlusseinheit anschliessbar, wobei von maximal zwei dieser acht Endgeräte E1 bis E8 zur gleichen Zeit eine Verbindung zur Vermittlungseinheit des Femmeldenetzes ISDN aufrechterhalten werden kann.
Die Verbindungen VU und V1 bis V8 von der Netzabschlusseinheit zu den Endgeräten E1 bis E8 werden häufig auch als S-Bus bezeichnet, wobei zum S-Bus neben den vermittlungstechnischen Leitungen auch die erwähnten Speiseleitungen gehören. Für weitergehende Erläuterungen bezüglich des S-Busses sei auf die ISDN-Norm ITU-T 1.430, bezüglich des Basisanschlusses auf die ISDN-Norm ITU-G.961 und bezüglich der Netzabschlusseinheit auf die ISDN-Norm ETR 080 verwiesen.

Wie erwähnt ist die Netzabschlusseinheit in der Steckdose D1 integriert. Wegen der engen Platzverhältnisse - insbesondere, wenn die Steckdose in einen zylinderförmigen Hohlraum mit einem Innendurchmesser von ca. 65 mm und einer Zylinderhöhe von ca. 53 mm eingelassen wird - ist es nicht möglich, sämtliche Schaltungsteile in die Steckdose D1 zu integrieren. In der in der Fig. 1 dargestellten Ausführungsform der Erfindung ist aus diesem Grund ein erster Teil der Netzabschlusseinheit in der Steckdose D1 enthalten und ein zweiter Teil der Netzabschlusseinheit ausserhalb der Steckdose D1 angeordnet. Während die Schaltungsteile der Netzabschlusseinheit für die U-Schnittstelle US und für die S-Schnittstelle SS vollständig in der Steckdose D1 integriert sind, ist die Speisung für die Endgeräte E1 bis E8 in die Speiseeinheit SP ausgegliedert.
Die Unterteilung der Netzabschlusseinheit in einen ersten und einen zweiten Teil weist den Vorteil auf, dass durch die Trennung der Speisung von den übrigen Schaltungselementen die Betriebssicherheit der Netzabschlusseinheit insgesamt erhöht wird, da Störeinflüsse durch Schaltungsteile der Speisung (220 V) auf Schaltungsteile der Netzabschlusseinheit (5 bis 40 V) vermieden werden können. Darüber hinaus entfallen besondere Vorkehrungen zur Kühlung von Schaltungsbauteilen weitgehend, wenn bei der Aufteilung der Netzabschlusseinheit darauf geachtet wird, dass Baugruppen mit relativ geringem Energieverbrauch in die Steckdose D1 aufgenommen werden und Baugruppen mit höherem Energieverbrauch, wie beispielsweise eben der Speisung, ausserhalb der Steckdose D1 angeordnet sind.

Die Aufteilung der Netzabschlusseinheit in zwei Teile hat zur Folge, dass - falls, wie in der Fig. 1 dargestellt, auch an die Steckdose D1 ein Endgerät anschliessbar sein soll - neben dem Endgerätanschluss A1 auch ein Versorgungsanschluss SPA vorgesehen ist, an den die Speiseeinheit SP über eine Speiseleitung VS anschliessbar ist. Vorstellbar ist jedoch ebenso eine Speiseleitung, die unter Putz direkt an die Netzabschlusseinheit anschliessbar ist, womit die Steckdose D1 - wie die weiteren Steckdosen D2 bis D8 - keinen Versorgungsanschluss SPA aufweist.

Die Speiseeinheit SP ist vorzugsweise ein Steckemetzgerät mit einem in das Gehäuse integrierten Anschlussstecker, der an das Energieversorgungssystem anschliessbar ist, wodurch die Speiseeinheit SP räumlich fixiert wird. Es ist lediglich noch die Speiseleitung VS über den Versorgungsanschluss SPA an die Steckdose D1 anzuschliessen.

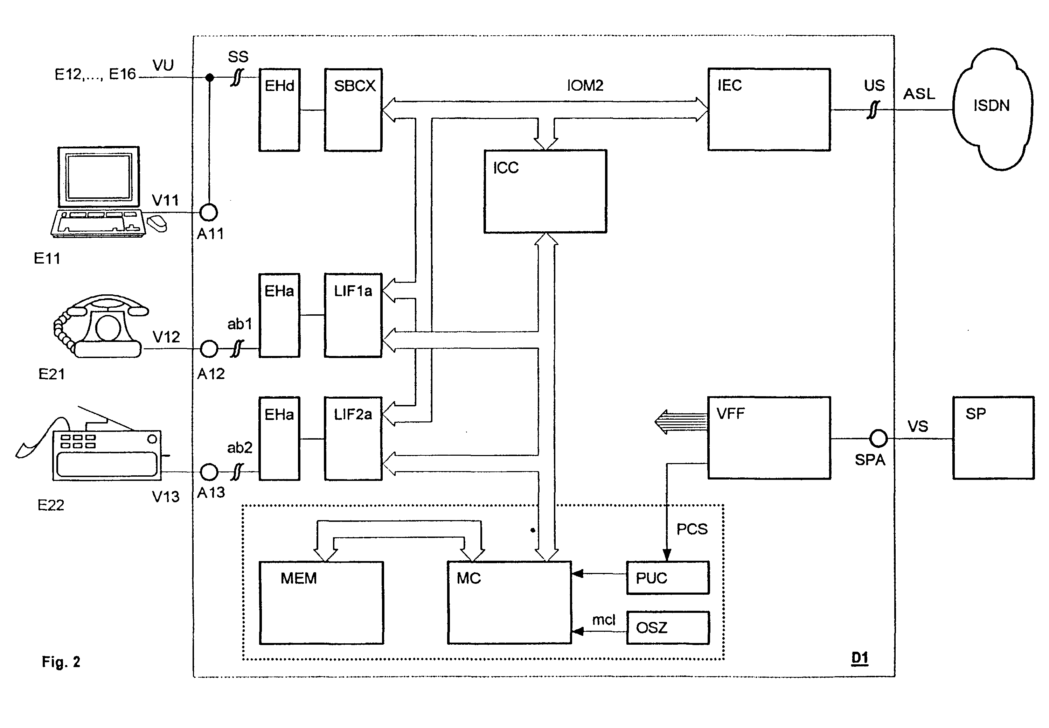

Fig. 2 zeigt ein aus der EP 0 668706 A2 bekanntes Netzabschlussgerät, das erfindungsgemäss in die Steckdose D1 integriert wurde. Dieses Netzabschlussgerät enthält, das zwei getrennte Busssysteme IOM2 (2B+D-Kanal-Bus) sowie PB (Prozessorbus) aufweist, erlaubt die wahlweise Verbindung von zwei analogen Endgeräten E21, E22 sowie bis zu sechs digitalen Endgeräten E11, ..., E16 über eine U-Schnittstelle US mit einer Vermittlungseinheit des ISDN. Das erste Bussystem IOM2 verbindet eine mit der U-Schnittstelle US verbundene Echokompensationsbaugruppe IEC mit einer Kommunikationssteuerung ICC sowie mit einer S-Schnittstellenbaugruppe SBCX und zwei ab-Schnittstellen-Baugruppen LIF1a bzw. LIF2a. Die S-Schnittstellenbaugruppe SBCX ist über eine S-Schnittstelle SS mit den digitalen Endgeräten E11, ..., E16 und die ab-Schnittstellen-Baugruppen LIF1a bzw. LIF2a sind über ab-Schnittstellen ab1; ab2 je mit einem analogen Endgerät E21 bzw. E22 verbunden. Das Endgerät E22 ist im vorliegenden Fall ein Fax-Gerät. Das zweite Busssystem PB verbindet die Kommunikationssteuerung ICC und die ab-Schnittstellen-Baugruppen LIF1a bzw. LIF2a mit einem Prozessorsystem PCS, welches durch einen Prozessor MC, eine Speicherbaugruppe MEM sowie einen Oszillator OSZ gebildet wird. Femer ist ein Power-up-Controller PUC vorgesehen, dem über eine Speiseleitung VS, einen Versorgungsanschluss SPA sowie ein vorzugsweise zur Absicherung, Filterung und Stromverteilung vorgesehenes Modul VFF eine von einer externen Speiseeinheit SP abgegebene Versorgungsspannung zugeführt wird. Durch den Power-up-Controller PUC wird dem Prozessor MC der Status der Versorgungsspannung signalisiert, damit rechtzeitig die notwendigen Ein- und Abschalt- (Power-up, Power-down) - Routinen durchgeführt werden können. Für den Notbetrieb, beim Ausfall der lokalen Stromversorgung, ist es vielfach notwendig, dass der Stromverbrauch der Schaltungsanordnung stark reduziert wird, da in diesem Fall die Speisung durch die Vermittlungseinheit erfolgt. Dazu wird vorgesehen, dass nur eines der (analogen oder digitalen) Endgeräte E11, ..., E22 in Betrieb genommen wird. Bei den bekannten Netzabschlussgeräten erfolgt im Notbetrieb bzw. beim Ausfall der lokalen Stromversorgung eine Polaritätswechsel der auf dem S-Bus (teilnehmerseitig) angelegten Spannung. Dadurch werden bei dem für den Notbetrieb vorgesehenen Endgerät (z.B. E1) nicht zwingend benötigte Funktionen (Komfortfunktionen) sowie die weiteren Endgeräte abgeschaltet.

Durch die Integration des beschriebenen Netzabschlussgerätes in die Steckdose D1 erhält der Anwender die Möglichkeit zum Anschluss analoger und digitaler Endgeräte E11, E21, E22 über Anschlüsse A11, A12 sowie A13 an die Steckdose D1. Die Anzahl Anschlüsse A11, A12 sowie A13 kann entsprechend den Bedürfnissen variiert werden. Vorzugsweise wird ein Anschluss A11 für ein digitales und ein Anschluss A12 für ein analoges Engerät E11 bzw. E21 vorgesehen.

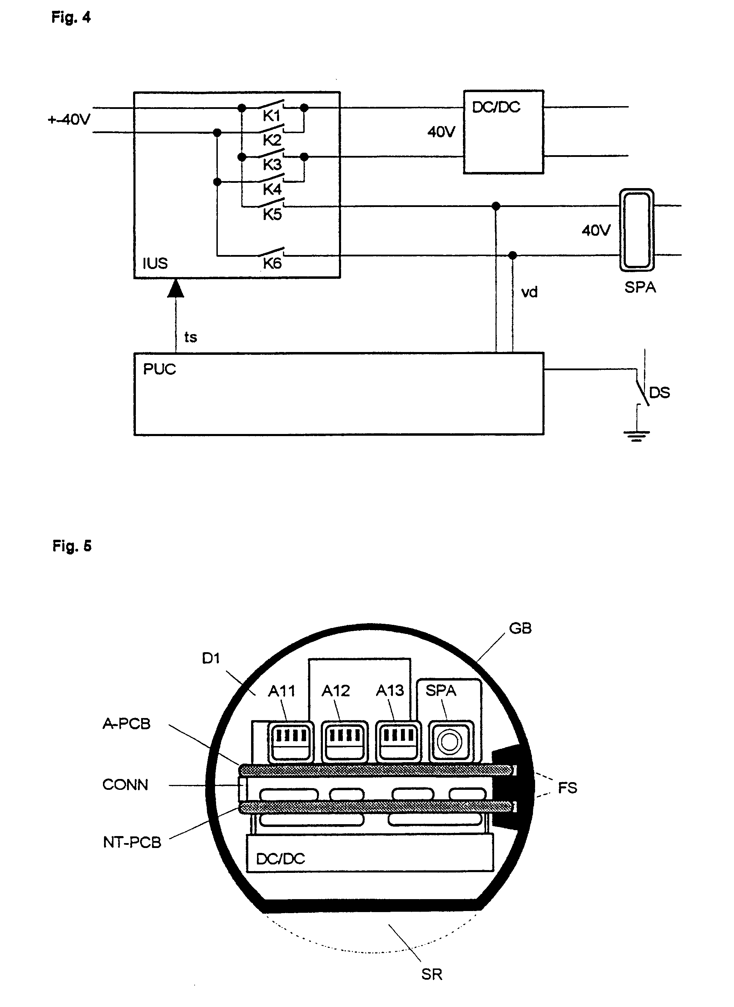

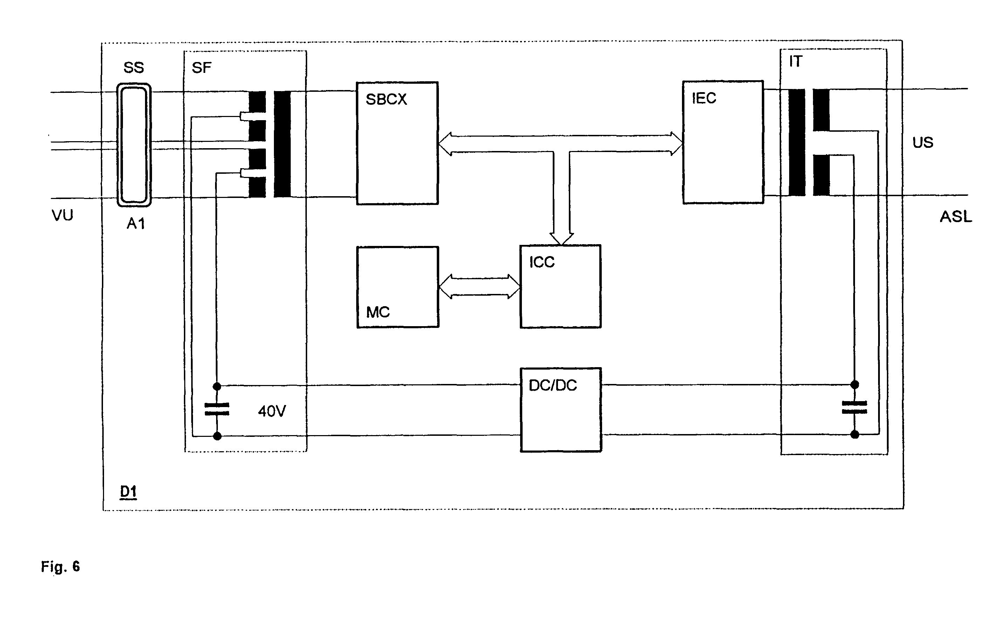

Als Nachteil bei der in Fig. 2 beschriebenen Anordung verbleibt die Notwendigkeit zur Verwendung eines externen Speisegerätes SP, das sich nicht zuletzt aus Sicherheitsgründen nicht in die Steckdose D1 integrieren lässt. In einer bevorzugten Ausgestaltung der Erfindung wird daher vorgesehen, die angeschlossenen Endgeräte E sowie die in der Steckdose D1 vorgesehenen Module nur über die von der Vermittlungseinheit zugeführte Betriebsspannung zu speisen. Voraussetzung dabei ist, dass die teilnehmerseitig beanspruchte Leistung den vom ISDN-Netz-Betreiber spezifizierten Wert nicht überschreitet. Damit alle vorgesehenen Endgeräte E mit all ihren Funktionen zur Verfügung stehen, wird in diesem Fall die Polarität der an die S-Schnittstelle SS angelegten Spannung nicht gewechselt. Die Speisung des Netzabschlusses und der Engeräte E erfolgt daher vollumfänglich durch die von der Vermittlungseinheit zugeführte Versorgungsspannung. Fig. 6 zeigt die Steckdose D1 mit dem darin integrierten Netzabschlussgerät, das ebenso wie die an die S-Schnittstelle angeschlossenen Endgeräte E von der Vermittlungseinheit des ISDN über die U-Schnittstelle US gespeist wird. Vom Eingangsübertrager IT wird die zugeführte Gleichspannung abgenommen und einem Gleichspannungswandler DC/DC zugeführt, der die benötigten Versorgungsspannungen erzeugt, von denen eine ohne Polaritätswechsel der S-Schnittstelle SS zugeführt wird.

Falls die durch die angeschlossenen Endgeräte E benötigte Leistung den zulässigen Wert überschreitet, soll der Teilnehmer ein Speisegerät SP an das integrierte Netzabschlussgerät anschliessen können (siehe Fig. 1 - 4). Dazu ist der Versorgungsanschluss SPA vorgesehen. Beim Betrieb des Netzabschlussgerätes mit lokaler Stromversorgung und mit Endgeräten E, deren Leistungsbedarf über dem vom ISDN-Netz-Betreiber vorgesehenen Wert liegt, soll bei einem Ausfall der lokalen Stromversorgung die Stromversorgung über die U-Schnittstelle US mit Polaritätswechsel der an die S-Schnittstelle SS angelegten Spannung erfolgen (Notbetrieb).

Beim Betrieb des Netzabschlussgerätes mit lokaler Stromversorgung und mit Endgeräten E, deren Leistungsbedarf unter dem vom ISDN-Netz-Betreiber spezifizierten Wert liegt, erfolgt die Stromversorgung beim Ausfall der lokalen Stromversorgung vorzugsweise, wie oben beschrieben, über die U-Schnittstelle US ohne Polaritätswechsel. Dem Teilnehmer stehen in diesem Fall während dem Normal- und dem Notbetrieb alle Endgeräte E uneingeschränkt zur Verfügung. Eine Belastung des Kommunikationsnetzes erfolgt in diesem Fall jedoch nur während einem lokalen Stromausfall.

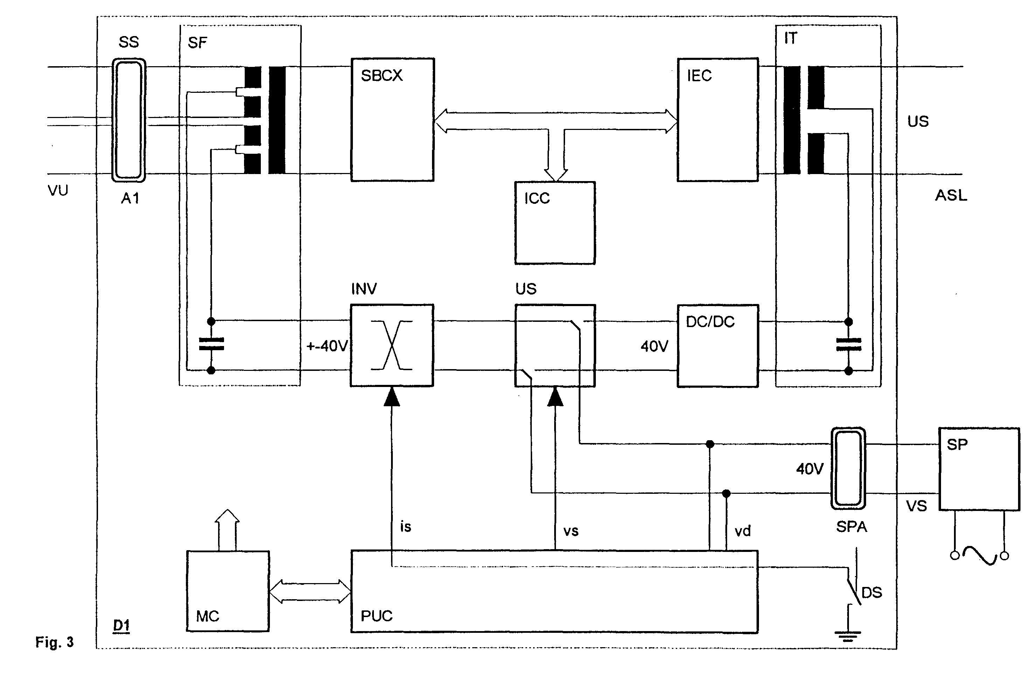

Die Betriebsart des Netzabschlussgerätes ist daher davon abhängig, ob eine lokale Stromversorgung vorgesehen ist und ob der Leistungsbedarf der angeschlossenen Endgeräte den Wert der vom Kommunikationsnetz zur Verfügung gestellten Leistung überschreitet. In der Steckdose D1 ist daher ein (direkt oder indirekt) manuell zu betätigender Schalter DS vorzusehen, durch den die Betriebsart (mit oder ohne Polaritätswechsel während dem Notbetrieb) einstellbar ist. Vorzugsweise ist der Versorgungsanschluss SPA mit einem Schalter DS (siehe Fig. 3) versehen, der beim Einschieben des Steckers des Speisegerätes SP betätigt wird. Falls keine lokale Stromversorgung vorgesehen und daher kein Stecker eingefügt ist, erfolgt die Stromversorgung vollständig und ohne Polaritätswechsel über die U-Schnittstelle US (analog zur Schaltungsanordnung gemäss Fig. 6). Falls eine lokale Stromversorgung vorgesehen ist, erfolgt bei deren Ausfall die Stromversorgung über die U-Schnittstelle US mit Polaritätswechsel. Ein Polaritätswechsel kann bei der Verwendung von Endgeräten mit geringem Leistungsbedarf vermieden werden, falls der Schalter DS manuell (nicht mittelbar durch den Stecker) derart eingestellt wird, dass kein Polaritätswechsel beim Ausfall der lokalen Stromversorgung erfolgt.

Eine beispielsweise Ausführung dieser vorzugsweisen Ausgestaltung der Erfindung ist in Fig. 3 dargestellt. Die Datenübertragung von und zu den Endgeräten erfolgt in bekannter Weise über einen ersten Übertrager IT, die Echokompensationsbaugruppe IEC, die S-Schnittstellenbaugruppe SBCX und einen zweiten Übertrager SF. Vom ersten Übertrager IT ist die von der Vermittlungseinheit zugeführte Versorgungsspannung über einen Gleichspannungswandler DC/DC, einen steuerbaren Umschalter US, einen steuerbaren Polaritätswandler INV und über den zweiten Übertrager SF auf den vieradrigen S-Bus übertragbar. Anstelle der Versorgungsspannung vom Gleichspannungswandler DC/DC ist über den Umschalter US auch die Versorgungsspannung des lokalen Speisegerätes SP zuführbar. Dem zur Steuerung des Umschalters US und des Polaritätswandlers INV vorgesehenen Power-up-Controller PUC wird dazu über eine Leitung vd der Status der lokalen Versorgungsspannung und durch den Schalter DS die Präsenz eines Steckers im Versorgungsanschluss SPA bzw. der vorgesehene Notbetrieb (Polaritätswechsel : ja / nein) gemeldet. Durch den Power-up-Controller PUC wird daher, sofern vorhanden, die lokale und ansonsten die von der Vermittlungseinheit zugeführte Versorgungsspannung zur Speisung des Netzabschlussgerätes und der Endgeräte E durchgeschaltet. Ferner wird über die Steuerleitung is für den Notbetrieb bedarfsweise eine Polaritätswechsel der an den S-Bus angelegten Versorgungsspannung veranlasst. Der Umschalter US und der Polaritätswandler INV können ferner durch ein Umschaltmodul IUS realisiert werden, wie es in Fig. 4 dargestellt ist. Durch das über eine Steuerleitung ts mit dem Power-up-Controller PUC verbundene Umschaltmodul IUS kann über Kontakte K1, ..., K6 entweder die Versorgungsspannung vom Speisegerät SP oder die vom Gleichspannungswandler DC/DC abgegebene Spannung mit oder ohne Polaritätswechsel der S-Schnittstelle SS zugeführt werden.

Zur Realisierung der Integration des Netzabschlussgerätes in die Steckdose D1 werden vorzugsweise elektronische Hybridschaltungen verwendet, die die teilnehmerseitigen Übertrager ersetzen. Für die S-Schnittstelle SS und für die ab-Schnittstellen ab1, ab2 (siehe Fig. 2) wird bevorzugt die Bausteine PEB 3023 bzw. PEB 4065 von Siemens verwendet, die eine platzsparende elektronische Gabelschaltung enthalten.

In Fig. 5 ist eine vorzugsweise Anordnung der Module in der Steckdose D1 gezeigt, bei der die Abdekkung entfernt ist. Diese Steckdose D1 weist einen Gehäusebecher GB mit zwei Führungsschienen FS auf, in die zwei z.B. über eine Steckverbindung oder ein Flachbahnkabel CONN miteinander verbundene Schaltplatinen A-PCB und NT-PCB einschiebbar sind. Die erste Schaltplatine A-PCB trägt die Anschlussbauteile (Übertrager, Buchsen, etc.). Die zweite Schaltplatine NT-PCB trägt die Bauteile des Netzabschlussgerätes und den Gleichspannungswandler DC/DC. Die Schaltplatinen A-PCB und NT-PCB sind dabei derart angeordnet, dass deren Bauteile einander entgegengesetzt ausgerichtet sind. Zur Verstauung von Anschlusskabeln ist vorzugsweise für Unterputzdosen eine Ausnehmung SR im vorzugsweise zylinderförmigen Gehäusebecher GB vorgesehen. Femer sind Befestigungsmittel und Abdeckungen vorgesehen, die eine Montage der Anschlusssteckdose auf Putz oder unter Putz erlauben.

## Patentansprüche

1. Anschlusssteckdose (D1) für Femmeldeendgeräte mit wenigstens einem Endgerätanschluss (A1 bzw. A11, A12, A13) zum Anschliessen eines Endgerätes (E1 bzw. E11, E21, E22), wobei die Anschlusssteckdose (D1) eine Netzabschlusseinheit beinhaltet, die über eine erste Schnittstelle (US) an ein digitales Femmeldenetz (ISDN) anschliessbar ist und die eine mit wenigstens einem Endgerätanschluss (A11) verbundene S-Schnittstelle (SS) aufweist, die über eine Verbindungsleitung (VU) mit weiteren Endgeräten (E2 bis E8) verbindbar ist.

2. Anschlusssteckdose (D1) für Fernmeldeendgeräte mit wenigstens einem Endgerätanschluss (A1 bzw. A11, A12, A13) zum Anschliessen eines Endgerätes (E1 bzw. E11, E21, E22), wobei die Anschlusssteckdose (D1) eine Netzabschlusseinheit beinhaltet, die über eine erste Schnittstelle (US) an ein digitales Fernmeldenetz (ISDN) anschliessbar ist und die wenigstens eine mit einem Endgerätanschluss (A12, A13) verbundene ab-Schnittstelle (ab1, ab2) und eine mit wenigstens einem Endgerätanschluss (A11) verbundene S-Schnittstelle (SS) aufweist, die über eine Verbindungsleitung (VU) mit weiteren Endgeräten (E2 bis E8) verbindbar ist.

3. Anschlusssteckdose (D1) nach Anspruch 1 oder 2,
**dadurch gekennzeichnet, dass**
die Anschlusssteckdose (D1) zum Anschluss einer Speiseeinheit (SP) einen Versorgungsanschluss (SPA) aufweist oder dass das Netzabschlussgerät ausschliesslich über die U-Schnittstelle (US) speisbar ist, ohne dass ein Polaritätswechsel der an die S-Schnittstelle (SS) angelegten Spannung erfolgt.

4. Anschlusssteckdose (D1) nach Anspruch 1 oder 2,
**dadurch gekennzeichnet, dass**
die Anschlusssteckdose (D1) zum Anschluss einer Speiseeinheit (SP) einen Versorgungsanschluss (SPA) aufweist und dass ein Power-up-Controller (PUC) vorgesehen ist, der einen Umschalter (US; IUS) derart steuert, dass bei einem lokalen Stromausfall die Stromversorgung über die U-Schnittstelle (US) erfolgt.

5. Anschlusssteckdose (D1) nach Anspruch 4,
**dadurch gekennzeichnet, dass**
ein Schalter (DS) vorgesehen ist, durch den für den Notbetrieb ein Polaritätswechsel der dem S-Bus über die U-Schnittstelle (US) zugeführten Spannung einstellbar ist.

6. Anschlusssteckdose (D1) nach Anspruch 5,
**dadurch gekennzeichnet, dass**
der Schalter (DS) mit dem Versorgungsanschluss (SPA) mechanisch verbunden und durch den Stecker der Speiseeinheit (SP) betätigbar ist, so dass die Speisung der S-Schnittstelle (SS) bei nicht eingefügtem Stecker über die U-Schnittstelle (US) ohne Polaritätswechsel und bei eingefügtem Stecker und lokalem Stromausfall über die U-Schnittstelle (US) mit Polaritätswechsel erfolgt.

7. Anschlusssteckdose (D1) nach einem der Ansprüche 1 bis 6,
**dadurch gekennzeichnet, dass**
einen Gehäusebecher (GB) vorgesehen ist, in den zwei miteinander verbundene Schaltplatinen (A-PCB, NT-PCB) einfügbar sind, von denen die erste die zum Anschluss der Endgeräte (E11, ..., E16; E21, E22) benötigten Bauteile und die zweite die Bauteile des Netzabschlussgerätes trägt, wobei die Bauteile derart angeordnet sind, dass zwischen den Schaltplatinen (A-PCB, NT-PCB) keine oder nur SMD-Bauteile vorgesehen sind.

8. Anschlusssteckdose (D1) nach Anspruch 7,
**dadurch gekennzeichnet, dass**
Abmessungen vorgesehen sind, die einen Einbau in einen zylinderförmigen Hohlraum mit einem Innendurchmesser von ca. 65 mm und einer Zylinderhöhe von ca. 53 mm erlauben.

9. Anschlusssteckdose (D1) nach Anspruch 7 oder 8,
**dadurch gekennzeichnet, dass**
der Gehäusebecher (GB) eine Ausnehmung (SR) zum Verstauen der Anschlusskabel (VU, ASL) aufweist

10. Anschlusssteckdose (D1) nach einem der Ansprüche 7 bis 9,
**dadurch gekennzeichnet, dass**
die zweite Schaltplatine (NT-PCB) zusätzlich einen zur Erzeugung der benötigten Versorgungsspannungen dienenden Gleichspannungswandler (DC/DC) trägt.

11. Anschlusssteckdose (D1) nach einem der Ansprüche 1 bis 10,
**dadurch gekennzeichnet, dass**
das Netzabschlussgerät teilnehmerseitig durch elektronische Gabelschaltungen an die analogen und/oder digitalen Schnittstellen (ab, SS) angeschlossen ist.

12. Anschlusssteckdose (D1) nach einem der Ansprüche 1 bis 11,
**dadurch gekennzeichnet, dass**
Befestigungsmittel und Abdeckungen vorgesehen sind, die eine Montage der Anschlusssteckdose (D1) auf Putz oder unter Putz erlauben.

## Claims

1. Socket (D1) for terminal communication equipment with at least one terminal equipment unit connection (A1 or A11, A12, A13) for the connection of a terminal equipment unit (E1 or E11, E21, E22), with socket (D1) containing a network termination unit that is connectable via a first interface (US) to a digital telecommunications network (ISDN) and which has an S-interface (SS) that is connected to at least one terminal equipment unit connection (A11) and which is connectable to further terminal equipment units (E2 to E8) via a trunk line (VU).

2. Socket (D1) for terminal communications equipment with at least one terminal equipment unit connection (A1 or A11, A12, A13) for the connection of a terminal equipment unit (E1 or E11, E21, E22), with the socket (D1) containing a network termination unit which is connectable via a first interface (US) to a digital telecommunications network (ISDN) and which has an ab-interface (ab1, ab2) that is connected to at least one terminal equipment unit connection (A12, A13) and an S-interface (SS) that is connected to at least one terminal equipment unit connection (A11), said S-interface being connectable with further terminal equipment units (E2 to E8) via a trunk line (VU).

3. Socket (D1) according to Claim 1 or 2, **characterised in that** socket (D1) has a supply connection (SPA) for the connection of a supply unit (SP) or that the network termination device can be supplied exclusively via the U-interface (US) without a change in polarity of the voltage applied to the S-interface (SS) taking place.

4. Socket (D1) according to Claim 1 or 2, **characterised in that** socket (D1) has a supply connection (SPA) for the connection of a supply unit (SP) and that a power-up controller is provided which controls a change-over switch (US; IUS) so that during a failure of local power, power supply will take place via the U-interface (US).

5. Socket (D1) according to Claim 4, **characterised in that** a switch (DS) is provided through which a change in polarity of the voltage fed to the S-bus via the U-interface (US) can be set during emergency operation.

6. Socket (D1) according to Claim 5, **characterised in that** the switch (DS) is connected mechanically to the supply connection (SPA) and can be activated via the plug of the supply unit (SP) so that when the plug is not inserted, the supply of the S-interface (SS) occurs via the U-interface (US) without change in polarity and in the event of the plug being inserted and a failure of local power, via the U-interface (US) with a change in polarity.

7. Socket (D1) according to one of Claims 1 to 6, **characterised in that** a housing cup (GB) is provided into which two interconnected printed circuit boards (A-PCB, NT-PCB) can be inserted, of which the first bears the components necessary for the connection of terminal equipment units (E11,..., E16; E21, E22) and the second bears the components of the network termination device, with the components being arranged so that between the printed circuit boards (A-PCB, NT-PCB), no components or only SMD components are provided.

8. Socket (D1) according to Claim 7, **characterised in that** dimensions are provided which permit mounting into a cylindrical cavity with an inner diameter of about 65 mm and a cylinder height of about 53 mm.

9. Socket (D1) according to Claim 7 or 8, **characterised in that** the housing cup (GB) provides a recess (SR) for the storage of the connecting cable (VU, ASL).

10. Socket (D1) according to one of Claims 7 to 9, **characterised in that** the second printed circuit board (NT-PCB) also bears a direct current converter (DC/DC) for the production of the necessary supply voltages.

11. Socket (D1) according to one of Claims 1 to 10, **characterised in that** the network termination device is connected on the user side via an electronic hybrid circuits to the analogue and/or digital interfaces (ab, SS).

12. Socket (D1) according to one of Claims 1 to 11, **characterised in that** mounting devices and covers are provided that will permit surface or concealed mounting of the socket (D1).

## Revendications

1. Prise (D1) de connexion pour terminaux de télécommunication comportant au moins une borne (A1 ou A11, A12, A13) de terminal pour la connexion d'un terminal (E1 ou E11, E21, E22), la prise (D1) de connexion contenant une unité de terminaison sur réseau qui peut être raccordée par l'intermédiaire d'une première interface à un réseau (ISDN) de télécommunication numérique et qui comporte une interface (SS) S qui est reliée à au moins une borne (A11) de terminal et qui peut être reliée par l'intermédiaire d'une ligne (VU) de liaison à des terminaux (E2 à E8) supplémentaires.

2. Prise (D1) de connexion pour terminaux de télécommunication comportant au moins une borne (A1 ou A11, A12, A13) de terminal pour la connexion d'un terminal (E1 ou E11, E21, E22), la prise (D1) de connexion contenant une unité de terminaison sur réseau qui peut être raccordée par l'intermédiaire d'une première interface (US) à un réseau (ISDN) de télécommunication numérique et qui comporte au moins une interface (ab1, ab2) ab reliée à une borne (A12, A13) de terminal et une interface (SS) S qui est reliée à au moins une borne (A11) de terminal et qui peut être reliée par l'intermédiaire d'une ligne (VU) de liaison à des terminaux (E2 à E8) supplémentaires.

3. Prise (D1) de connexion suivant la revendication 1 ou 2, **caractérisée en ce que** la prise (D1) de connexion comporte une borne (SPA) d'alimentation pour la connexion d'une unité (SP) d'alimentation ou **en ce que** l'appareil de terminaison sur réseau ne peut être alimenté qu'exclusivement par l'intermédiaire de l'interface (US) U sans qu'il s'effectue une inversion de polarité de la tension appliquée à l'interface (SS) S.

4. Prise (D1) de connexion suivant la revendication 1 ou 2, **caractérisée en ce que** la prise (D1) de connexion comporte une borne (SPA) d'alimentation pour la connexion d'une unité (SP) d'alimentation et **en ce qu'**il est prévu un Power-up-Controller (PUC) qui commande un commutateur (US ; IUS) de telle manière que, en cas de panne locale du courant, l'alimentation en courant s'effectue par l'intermédiaire de l'interface (US) U.

5. Prise (D1) de connexion suivant la revendication 4, **caractérisée en ce qu'**il est prévu un commutateur (DS) par lequel il peut être réglé, pour le fonctionnement en détresse, une inversion de polarité de la tension envoyée au bus (S) par l'intermédiaire de l'interface (US) U.

6. Prise (D1) de connexion suivant la revendication 5, **caractérisée en ce que** le commutateur (DS) est relié mécaniquement à la borne (SPA) en alimentation et peut être actionné par le connecteur de l'unité (SP) d'alimentation, si bien que l'alimentation de l'interface (SS) S s'effectue sans inversion de polarité par l'intermédiaire de l'interface (US) U lorsque le connecteur n'est pas inséré et avec inversion de polarité par l'intermédiaire de l'interface (US) U lorsque le connecteur est inséré et en cas de panne locale du courant.

7. Prise (D1) de connexion suivant l'une des revendications 1 à 6, **caractérisée en ce qu'**il est prévu un boîtier (GB) dans lequel peuvent être insérées deux platines (A-PCB, NT-PCB) à circuit imprimé qui sont reliées l'une à l'autre, dont la première porte les composants nécessaires à la connexion des terminaux (E11, ..., E16 ; E21, E22) et dont la seconde porte les composants de l'appareil de terminaison sur réseau, les composants étant disposés de manière qu'il ne soit pas prévu de composants entre les platines (A-PCB, NT-PCB) à circuit imprimé ou de façon qu'il n'y soit prévu que des composants SMD.

8. Prise (D1) de connexion suivant la revendication 7, **caractérisée en ce qu'**il est prévu des dimensions qui permettent à un montage dans une cavité en forme de cylindre ayant un diamètre intérieur d'environ 65 mm et une hauteur de cylindre d'environ 53 mm.

9. Prise (D1) de connexion suivant la revendication 7 ou 8, **caractérisée en ce que** le boîtier (GB) comporte un évidement (SR) pour abriter les câbles (VU, ASL) de connexion.

10. Prise (D1) de connexion suivant l'une des revendications 7 à 9, **caractérisée en ce que** la deuxième platine (NT-PCB) à circuit imprimé porte de plus un convertisseur (DC/DC) de tension continue servant à produire les tensions d'alimentation nécessaires.

11. Prise (D1) de connexion suivant l'une des revendications 1 à 10, **caractérisée en ce que** l'appareil de terminaison sur réseau est raccordé côté abonné par des termineurs électroniques aux interfaces (ab, SS) analogiques et/ou numériques.

12. Prise (D1) de connexion suivant l'une des revendications 1 à 11, **caractérisée en ce qu'**il est prévu des moyens de fixation et des recouvrements qui permettent un montage de la prise (D1) de connexion sur crépi ou de manière encastrée.
